# EUROPÄISCHE PATENTSCHRIFT

(11) **EP 1 616 472 B1**
(45) Veröffentlichungstag und Bekanntmachung des Hinweises auf die Patenterteilung: **20.05.2009**
(21) Anmeldenummer: 05015189.3
(22) Anmeldetag: 13.07.2005
(51) Int. Cl.: A01D 34/82

(54) **Fahrbares Bodenbearbeitungsgerät**
Mobile soil working device
Dispositif mobile pour le travail du sol

(30) Priorität: 15.07.2004 DE 102004034304
(43) Veröffentlichungstag der Anmeldung: 18.01.2006
(73) Patentinhaber: GARDENA Manufacturing GmbH, 89079 Ulm (DE)
(72) Erfinder: Besserer, Bernhard, 89264 Weißenhorn (DE)

(56) Entgegenhaltungen:
- DE-A1- 3 500 591
- US-A- 4 466 308
- US-A- 5 203 147
- US-A1- 2004 050 028

## Beschreibung

Die Erfindung betrifft ein fahrbares Bodenbearbeitungsgerät mit einer durch ein Gestänge mit einem bodennahen Gehäuse beabstandet verbundenen Handgriffanordnung und einer Zweihand-Schutzschaltung zum Start eines motorischen Antriebs des Geräts.

Derartige Geräte sind neben Rasenlüftern, Vertikutierern, etc. primär Rasenmäher, so dass im folgenden der Einfachheit halber im Detail nur Rasenmäher behandelt sind, ohne aber die Erfindung darauf einzuschränken. Zur Vermeidung von Verletzungen durch die Messer eines solchen Rasenmähers bei versehentlichem Starten des Motors, insbesondere eines Elektromotors, sind Zweihand-Schutzschaltungen mit einem ersten und einem zweiten Betätigungselement bekannt, wobei zum Start des Motors beide Betätigungselemente sich gleichzeitig in ihrer jeweiligen Betätigungs-Endstellung befinden müssen. Für den laufenden Betrieb muss lediglich ein erstes Betätigungselement, typischerweise ein relativ zum Gestänge schwenkbarer Griffbügel in seiner Endstellung gehalten werden. Das zweite Betätigungselement ist häufig an einem separaten, von dem Griffbügel beabstandet am Gestänge befestigten Schaltergehäuse befestigt.

Die US 5,203,147 beschreibt eine Schalteranordnung für einen Rasenmäher, bei welcher in einem Schaltergehäuse ein seitlich verschiebbarer Freigabeknopf entgegen einer rückstellenden Federkraft betätigbar ist. Ein in dem Schaltergehäuse schwenkbar gelagerter Handgriffbügel ist bei in Freigabestellung befindlichem Freigabeknopf in Richtung eines feststehenden Gestängebügels verschwenkbar und betätigt hierbei über eine Wippe einen Schalter. Nach Loslassen des Schaltbügels wird der Freigabeknopf durch die Federkraft wieder in eine Sperrstellung zurück bewegt, in welcher eine Bewegung des Schaltbügels verhindert ist. Die DE 197 11 899 C2 zeigt eine vergleichbare Anordnung, bei welcher aber der Schaltbügel auch bei in Sperrstellung befindlichem Freigabeknopf in Richtung des feststehenden Griffbügels verschwenkt werden kann und hierbei ein Zwischenfederelement vorspannt, welches bei nachfolgender Verschiebung des Freigabeknopfes in die Freigabestellung einen Motorschalter betätigt. Die DE 35 00 591 A1 zeigt eine Schalteranordnung für einen Rasenmäher, bei welchem an einem balkenförmigen Griffbügel zwei seitlich beabstandete Griffschalter vorgesehen sind, welche über eine Federanordnung und ein Sicherungsglied auf einen Motorschalter wirken. Ein Einschalten des Motorschalters erfolgt erst dann, wenn zusätzlich zu wenigstens einem der Griffschalter ein Freigabetaster betätigt wird.

Der vorliegenden Erfindung liegt die Aufgabe zugrunde, ein derartiges fahrbares Bodenbearbeitungsgerät mit einer benutzerfreundlich ausgebildeten Zweihand-Schutzschaltung anzugeben.

Die Erfindung ist im unabhängigen Anspruch 1 beschrieben. Die abhängigen Ansprüche enthalten vorteilhafte Ausgestaltungen und Weiterbildungen der Erfindung.

Die Integration des zweiten Betätigungselements in die Handgriffanordnung in der im kennzeichnenden Teil des Patentanspruch 1 beschriebenen Art erweisen sich als für die einfache und ergonomische Handhabung von besonderem Vorteil. Besonders vorteilhaft ist auch die Einfügung eines Zwischenfederelements zwischen das erste Betätigungselement und den Motorschalter.

Das zweite Betätigungselement ist vorteilhafterweise in einen dem Benutzer zugewandten plattenförmigen Bereich der Handgriffanordnung integriert. Der plattenförmige Bereich kann insbesondere innerhalb einer durch die Handgriffanordnung gebildeten umlaufenden Kontur als ein mittlerer Flächenbereich ausgebildet sein.

Das Zwischenfederelement ermöglicht insbesondere eine beliebige zeitliche Abfolge der Betätigungen der beiden Betätigungselemente bis zur Verlagerung in ihre jeweiligen Endstellungen. Während üblicherweise zuerst das zweite Betätigungselement in seine Endstellung verschoben und dort gehalten werden muss, bevor das erste Betätigungselement den Motorschalter zum Start des Motors auslösend wirksam betätigt werden kann, ist durch das Zwischenfederelement ein beliebige zeitliche Abfolge, insbesondere auch eine umgekehrte Betätigungsreihenfolge oder eine synchrone Betätigung beider Betätigungselemente möglich. Das Zwischenfederelement kann dabei auf eine Spannkraft vorgespannt und gehalten werden, welche bei nachfolgender Betätigung des zweiten Betätigungselements zur den Motor startenden Auslösung des Motorschalters ausreicht und dient.

Das zweite Betätigungselement verschiebt vorteilhafterweise ein Sperrelement, welches vorzugsweise Teil des Motorschalters sein kann, aus einer im Ruhezustand bei unbetätigten erstem und zweitem Betätigungselement eingenommenen Sperrstellung in eine Freigabestellung, in welcher eine Betätigung des Motorschalters über das erste Betätigungselement bzw. ein mit der Betätigung des ersten Betätigungselements gekoppeltes Zwischenelement möglich ist. Das zweite Betätigungselement enthält vorteilhafterweise einen um eine Hebelachse schwenkbaren Hebel und wirkt vorteilhafterweise mit einer Hebel-Kraftübersetzung von der der Hebelachse ferneren Betätigungsposition des Benutzers auf die der Hebelachse nähere Position des Spetralemänts, so dass das Sperrelement auch bei bereits betätigtem erstem Betätigungselement und am Motorschalter bzw. dem dessen Einschalten noch verhinderndem Sperrelement anliegender Betätigungskraft durch den Benutzer mit geringem Kraftaufwand über das zweite Betätigungselement verschiebbar ist. Vorzugsweise kehr das zweite Betätigungselement unter der Einwirkung einer Rückstellkraft in seine Ausgangsstellung zurück, wogegen wenn das Sperrelement bei betätigtem Motorschalter in der Freigabestellung verbleibt, bis beide Betätigungselemente durch den Benutzer losgelassen sind.

Der Motorschalter in der Handgriffanordnung kann direkt den Motorstrom oder auch nur einen weiteren Schalter, insbesondere ein elektromagnetisches Relais oder einen Halbleiterschalter ansteuern.

Die Erfindung ist nachfolgend anhand eines bevorzugten Ausführungsbeispiels unter Bezugnahme auf die Abbildungen noch eingehend veranschaulicht. Dabei zeigt:
- Fig. 1: ein Schnittbild durch eine Handgriffanordnung,
- Fig. 2: eine Schrägansicht einer Handgriffanordnung.

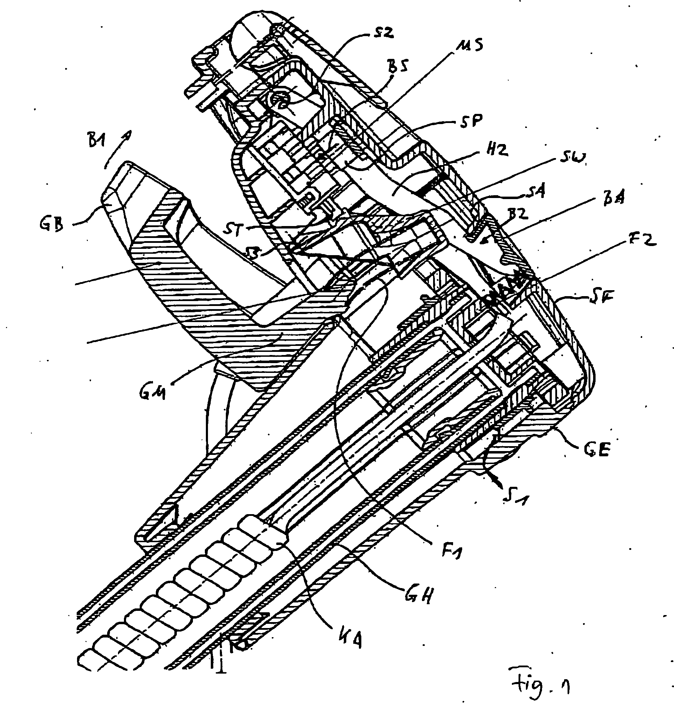

Fig. 1 ist ein Schnittbild durch eine Handgriffanordnung in einer in der vertikalen Mittellängsebene eines handgeführten elektromotorisch angetriebenen Rasenmähers liegenden Schnittebene. Bei der skizzierten Handgriffanordnung ist für diese ein z. B. als zweischaliges Kunststoff-Spritzgussteil ausgeführtes Gehäuse GE vorgesehen, welches am oberen Ende eines zentralen Gestängeholms GH befestigt ist. Innerhalb des Gestängeholms ist geschützt ein Verbindungskabel KA zwischen einem Motorschalter MS im Gehäuse GE und dem Elektromotor im nicht mit dargestellten bodennahen Gerätegehäuse geführt.

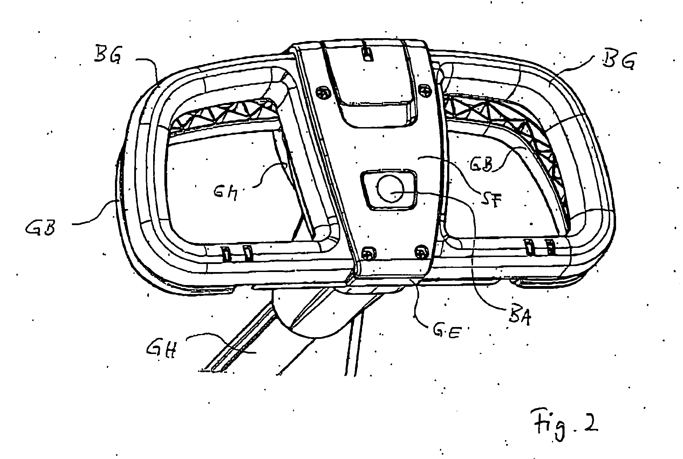

Ein Griffbügel GB als ein erstes Betätigungselement ist um eine erste Schwenkachse S1 schwenkbar gelagert. Der Griffbügel GB schließt sich im wesentlichen U-förmig an das Gehäuse GE an und ragt mit einem Mittelteil GM in das Gehäuse hinein. Der Griffbügel ist in der Ausschaltstellung des Motors gezeichnet und zum Betrieb des Motors in Pfeilrichtung B1 zu bogenförmigen Abschnitten BG des Gehäuses GE hin in eine Betriebsstellung entgegen einer Federkraft verschwenkbar und durch eine zugleich einen bogenförmigen Abschnitt BG (Fig. 2) des Gehäuses GE und den Griffbügel GB umfassende Hand des Benutzers in der Betriebsstellung haltbar.

In einer dem Benutzer nach schräg oben zuweisenden Stirnfläche SF des Gehäuses ist eine Aussparung SA vorgesehen, in welcher ein Bedienabschnitt BA eines zweiten Betätigungselements einliegt. Das zweite Betätigungselement ist durch eine im Gehäuse um eine zweite Schwenkachse S2 schwenkbar Hebelanordnung H2 mit dem der Schwenkachse entfernten Bedienabschnitt BA gebildet. Der Bedienabschnitt BA ist in der skizzierten Ruhestellung annähernd bündig mit der Stimfläche SF und kann vom Benutzer nach Art einer Taste entgegen der Rückstellkraft eines Federelements F2 in Betätigungsrichtung B2 um ein begrenztes Maß in das Gehäuse eingedrückt werden, wobei die gesamte Hebelanordnung H2 um die Schwenkachse S2 verschwenkt wird.

Die Schalteranordnung MS ist als Ein-Taster ausgeführt und enthält ein Sperrelement SP, welches im skizzierten Ruhezustand eine Betätigung der Schaltertaste ST verhindert und entgegen einer Rückstellkraft in Entriegelungsrichtung BS verschoben werden kann. Das Sperrelement wird bei Betätigung der Hebelanordnung H2 über den Bedienabschnitt BA von der Hebelanordnung in Entriegelungsrichtung gedrückt und gibt in der Entriegelungsstellung die Taste ST des Schalters MS frei.

Bei Betätigung des Griffbügels GB in Betätigungsrichtung B1 drückt das Mittelteil GM auf ein Zwischenfederelement F1, welches über eine um eine weitere Schwenkachse S3 schwenkbare Wippe SW auf die Schaltertaste einwirkt. Die Feder ist vorteilhaft im skizzierten Ruhezustand vorgespannt, wobei diese Vorspannung aber gering ist und insbesondere nicht ausreicht, die Schaltertaste ST über die Wippe ST entgegen dem Schaltwiderstand des Schalters einzudrücken. Bei Betätigung des Griffbügels GB wird die Feder F1 weiter gespannt und drückt die Wippe stärker auf die Schaltertaste ST.

Ist der Schalter MS bei Betätigen des Griffbügels GB als erstem Betätigungselement durch das Sperrelement verriegelt, kann die Taste ST nicht eingedrückt werden und die Feder F1 wird bis zu einer maximalen Spannkraft in der Endstellung des Griffbügels gespannt. Wird danach bei in der Endstellung festgehaltenem Griffbügel GB und damit weiter bestehender Spannkraft über den Bedienabschnitt BA die Hebelanordnung H2 als zweites Betätigungselement bis in ihre Endstellung gedrückt, so wird über das dabei mit verschobene Sperrelement SP der Schalter MS entriegelt und die Spannkraft der Feder drückt über die Wippe SW die Taste ST in die Einschalt-Stellung des Schalters.

Das erste Betätigungselement H2, BA kann danach wieder losgelassen werden. Der Schalter bleibt in der Einschalt-Stellung bis der Griffbügel wieder in die skizzierte Ruhestellung zurückkehrt und die eventuell gegebene geringe Vorspannung der Feder F1 nicht ausreicht, die Taste ST entgegen der Rückstellkraft des Schalters gedrückt zu halten. Nach Rückstellung der Taste ST in die Ausschalt-Stellung kann auch das Sperrelement SP in die Verriegelungsstellung zurückgleiten.

Ist zum Zeitpunkt der Betätigung des Griffbügels GB die Hebelanordnung H2 bereits in ihrer Endstellung und das Sperrelement dadurch in Entriegelungsstellung, so wird während der Betätigungsbewegung B1 die Taste ST in die Einschalt-Stellung gedrückt, sobald die Feder F1 ausreichend gespannt ist, um den mechanischen Schaltwiderstand des Schalters zu überwinden.

Innerhalb des zweiten Betätigungselements mit der Hebelanordnung HA und dem Bedienabschnitt BA ist die für die auf den Bedienabschnitt BA ausgeübte Kraft des Benutzers wirksame Hebellänge wenigstens doppelt so groß wie die für die Kraft zur Verschiebung des Sperrelements SP wirksame Hebellänge.

Die schwenkbare Wippe ermöglicht vorteilhafterweise auch eine Einbaulage des Schalters MS mit von der Betätigungsrichtung B1 des Griffbügels stark abweichender Verschieberichtung der Schaltertaste ST.

Geeignete Ein-Taster mit integriertem Sperrelement sind als fertige Bauteile kostengünstig erhältlich. Durch den Aufbau der Handgriffanordnung als zusammengesetzter Hohlkörper können solche handelsüblichen Schalter vorteilhaft eingebaut werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrbares Bodenbearbeitungsgerät mit einem motorischen, insbesondere elektromotorischen Antrieb und einer von einem bodennahen Gerätegehäuse über ein Gestänge beabstandeten Handgriffanordnung sowie mit einer Zweihand-Schutzschaltung mit einem ersten Betätigungselement an der Handgriffanordnung und einem zweiten Betätigungselement, wobei zum Start des Antriebs beide Betätigungselemente gleichzeitig in einer Betätigungs-Endstellung sein müssen, wobei das zweite Betätigungselement (H2, BA) in die Handgriffanordnung integriert ist und die Handgriffanordnung ein bezüglich des Gestänges (GH) feststehendes Gehäuse (GE) aufweist, in welchem ein Motorschalter (MS) und das zweite Betätigungselement (H2, BA) aufgenommen sind und an welchem das als Griffbügel (GB) ausgeführte erste Betätigungselement (GB, GM) schwenkbar gelagert ist, **dadurch gekennzeichnet, dass** das Gehäuse eine dem Benutzer zugewandte Mittenfläche (SF), in welcher ein Teil (BA) des zweiten Betätigungselements sichtbar und betätigbar ist, und seitlich der Mittenfläche dem Verlauf des Griffbügels (GB) folgende Bogenabschnitte (BG) aufweist.

2. Gerät nach Anspruch 1, **dadurch gekennzeichnet, dass** der schwenkbare Griffbügel (GB) mehrere Griffpositionen aufweist.

3. Gerät nach Anspruch 1 oder 2, **dadurch gekennzeichnet, dass** der Motorschalter (MS) als Ein-Taster ausgeführt ist.

4. Gerät nach einem der Ansprüche 1 bis 3, **dadurch gekennzeichnet, dass** der Motorschalter ein Sperrelement (SP) enthält, welches durch das zweite Betätigungselement (H2,BA) entriegelbar ist.

5. Gerät nach Anspruch 4, **dadurch gekennzeichnet, dass** das zweite Betätigungselement eine Schwenkhebelanordnung (H2) ist mit wenigstens zweifacher Kraftübersetzung zwischen der auf das zweite Betätigungselement (BA) ausgeübten Kraft und der auf das Sperrelement (SP) einwirkenden Kraft.

6. Gerät nach Anspruch 4 oder 5, **dadurch gekennzeichnet, dass** dem zweiten Betätigungselement ein von dem Sperrelement unabhängiges Rückstell-Federelement (F2) zugeordnet ist.

7. Gerät nach einem der Ansprüche 1 bis 6, **dadurch gekennzeichnet, dass** die zeitliche Abfolge der Betätigung der beiden Betätigungselemente für den Start des Antriebs unerheblich ist.

8. Gerät nach einem der Ansprüche 1 bis 7, **dadurch gekennzeichnet, dass** bei Betätigen des ersten Betätigungselements vor dem zweiten Betätigungselement das Zwischenfederelement (F1) auf eine Spannkraft vorgespannt wird, welche nach Betätigung des zweiten Betätigungselements zur Auslösung des Motorschalters ausreicht.

9. Gerät nach einem der Ansprüche 1 bis 8, **dadurch gekennzeichnet, dass** zwischen erstem Betätigungselement und Motorschalter eine schwenkbare Wippe (SW) aufweist, welche die Betätigungsrichtung des ersten Betätigungselements umsetzt in eine hiervon um wenigstens 60° verschiedene Schalterbetätigungsrichtung.

10. Gerät nach einem der Ansprüche 1 bis 9, **dadurch gekennzeichnet, dass** das erste Betätigungselement (GB, GM) über ein Zwischenfederelement (F1) auf den Motorschalter (MS) einwirkt.

## Claims

1. Mobile soil working device comprising a motor drive, in particular an electric motor drive, and a handle arrangement disposed at a distance from a device housing close to the ground by means of a bar linkage and also comprising a two-hand safety control with a first actuating element on the handle arrangement and a second actuating element, wherein both actuating elements must simultaneously be in an actuating end position in order to start the drive, the second actuating element (H2, BA) being integrated into the handle arrangement and the handle arrangement having a housing (GE) which is fixed with respect to the bar linkage (GH), which accommodates a motor switch (MS) and the second actuating element (H2, BA) and on which the first actuating element (GB, GM) designed as a grip handle (GB) is pivotably mounted, **characterised in that** the housing has a centre surface (SF) directed towards the user in which a part (BA) of the second actuating element is visible and can be operated, and curved portions (BG) following the course of the grip handle (GB) laterally of the centre surface.

2. Device according to claim 1, **characterised in that** the pivotable grip handle (GB) has several grip positions.

3. Device according to claim 1 or claim 2, **characterised in that** the motor switch (MS) is designed as an ON button.

4. Device according to one of claims 1 to 3, **characterised in that** the motor switch contains a blocking element (SP) which can be released by the second actuating element (H2, BA).

5. Device according to claim 4, **characterised in that** the second actuating element is a pivoted lever arrangement (H2) with at least double the leverage between the force exerted upon the second actuating element (BA) and the force acting on the blocking element (SP).

6. Device according to claim 4 or claim 5, **characterised in that** a return spring element (F2) independent of the blocking element is associated with the second actuating element.

7. Device according to one of claims 1 to 6, **characterised in that** the time sequence of the actuation of the two actuating elements is irrelevant to the starting of the drive.

8. Device according to one of claims 1 to 7, **characterised in that,** when the first actuating element is actuated before the second actuating element, the intermediate spring element (F1) is preloaded to a tension sufficient to trip the motor switch after the actuation of the second actuating element.

9. Device according to one of claims 1 to 8, **characterised by** a pivotable rocker (SW) between the first actuating element and the motor switch which converts the actuating direction of the first actuating element into a switch actuating direction differing therefrom by at least 60°.

10. Device according to one of claims 1 to 9, **characterised in that** the first actuating element (GB, GM) acts on the motor switch (MS) by means of an intermediate spring element (F1).

## Revendications

1. Dispositif mobile pour le travail du sol avec un entraînement par moteur, en particulier par moteur électrique, avec une structure à poignée qu'une tringlerie sépare d'un boîtier de dispositif près du solet avec un circuit protecteur bimanuel doté d'un premier élément d'actionnement sur la structure à poignée et d'un deuxième élément d'actionnement, les deux éléments d'actionnement devant être simultanément en position extrême d'actionnement au démarrage de l'entraînement, le deuxième élément d'actionnement (H2, BA) étant intégré dans la structure à poignée et la structure à poignée présentant un boîtier qui est fixe (GE) par rapport à la tringlerie (GH), qui loge un interrupteur de démarrage (MS) et le deuxième élément d'actionnement (H2, BA) et sur lequel le premier élément d'actionnement (GB, GA) est monté à pivotement sous forme de poignée en étrier (GB), **caractérisé en ce que** le boîtier présente une surface médiane (SF) tournée vers l'utilisateur, dans laquelle une partie (BA) du deuxième élément d'actionnement est visible et actionnable, et des segments d'arc (BG) à côté de la surface médiane qui suivent le profil de la poignée en étrier (GB).

2. Dispositif selon la revendication 1, **caractérisé en ce que** la poignée en étrier (GB) pivotable présente plusieurs positions de préhension.

3. Dispositif selon la revendication 1 ou 2, **caractérisé en ce que** l'interrupteur de démarrage (MS) est conçu sous forme de bouton d'enclenchement.

4. Dispositif selon l'une quelconque des revendications 1 à 3, **caractérisé en ce que** l'interrupteur de démarrage contient un élément de verrouillage (SP), lequel peut être déverrouillé par le deuxième élément d'actionnement (H2, BA).

5. Dispositif selon la revendication 4, **caractérisé en ce que** le deuxième élément d'actionnement est une disposition de levier pivotant (H2) avec au moins une double transmission de force entre la force exercée sur le deuxième élément d'actionnement (BA) et la force agissant sur l'élément de verrouillage (SP).

6. Dispositif selon la revendication 4 ou 5, **caractérisé en ce qu'**un élément de ressort de rappel (F2) indépendant de l'élément de verrouillage est associé au deuxième élément d'actionnement.

7. Dispositif selon l'une quelconque des revendications 1 à 6, **caractérisé en ce que** la séquence temporelle de l'actionnement des deux éléments d'actionnement est insignifiante pour le démarrage de l'entraînement.

8. Dispositif selon l'une quelconque des revendications 1 à 7, **caractérisé en ce que** lorsque le premier élément d'actionnement est actionné avant le deuxième élément d'actionnement, l'élément de ressort intermédiaire (F1) est précontraint par une force élastique qui suffit à déclencher l'interrupteur de démarrage après l'actionnement du deuxième élément d'actionnement.

9. Dispositif selon l'une quelconque des revendications 1 à 8, **caractérisé en ce qu'**il présente une bascule (SW) entre le premier élément d'actionnement et l'interrupteur de démarrage, laquelle convertit la direction d'actionnement du premier élément d'actionnement en une direction d'actionnement d'interrupteur qui en diffère d'au moins 60°.

10. Dispositif selon l'une quelconque des revendications 1 à 9, **caractérisé en ce que** le premier élément d'actionnement (GB, GM) agit sur l'interrupteur de démarrage (MS) par l'intermédiaire d'un élément de ressort intermédiaire (F1).
